# EUROPÄISCHE PATENTANMELDUNG

(11) **EP 1 254 831 A1**
(43) Veröffentlichungstag der Anmeldung: **06.11.2002**
(21) Anmeldenummer: 01110866.9
(22) Anmeldetag: 04.05.2001
(51) Int. Cl.: B63H 3/00, B64C 11/30

(54) **Verstellpropeller**

(71) Anmelder: Rudbach, Mike, 6834 Biwerbach (LU)
(72) Erfinder: Strieker, Thomas, 33415 Verl (DE); Strieker, Matthias, 33161 Hövelhof (DE); Funke, Herbert, 33378 Rheda-Wiedenbrück (DE); Rudbach, Mike, Dipl.-Ing, 6834 Biwerbach (LU)
(74) Vertreter: Haft, von Puttkamer, Berngruber, Czybulka

(57) **Zusammenfassung**

Verstellpropeller in Faserverbund- und/oder Gemischbauweise mit einem am Blattfuß eines jeden Propellerblattes angeordneten Gelenklager, welches im Propellerblatt zur Aufnahme der Fliehkräfte von Verstärkungsfaser umschlungen wird und so angeordnet ist, daß die Fliehkräfte im wesentlichen radial auf das Gelenklager wirken, und das Gelenklager zur Verstellung der Propellerblattsteigung im wesentlichen eine Schwenkbewegung ausführt, wobei in Richtung der Propellerblattlängsachse oberhalb des Gelenklagers ein weiteres, am Umfang des Blattfußes des Propellerblattes angeordnetes Führungslager zur Führung des Propellerblattes vorgesehen ist.

## Beschreibung

Die Erfindung betrifft einen Verstellpropeller in Faserverbund-und / oder Mischbauweise mit einem am Blattfuß eines jeden Propellerblattes angeordneten Gelenklager, welches im Propellerblatt zur Aufnahme der Fliehkräfte von Verstärkungsfasern umschlungen wird und so angeordnet ist, daß die Fliehkräfte im wesentlichen radial auf das Gelenklager wirken, und das Gelenklager zur Verstellung der Propellerblattsteigung im wesentlichen eine Schwenkbewegung ausführt, gemäß dem Oberbegriff des Anspruchs 1.

Propeller werden zur Erzeugung von Vorschub in Fluggeräten oder Wasser- oder Landfahrzeugen sowie zur Erzeugung von Luftströmungen und zur Energiegewinnung, z.B. in Windkraftanlagen oder Turbinen, eingesetzt.

Damit eine Anpassung zwischen Anströmgeschwindigkeit, Drehzahl und Steigung für unterschiedliche Betriebszustände erfolgen kann, werden derartige Propeller häufig mit einer Verstelleinrichtung versehen, um durch Verdrehen der Propellerblätter deren Steigung im Betrieb zu verändern. Die Verstelleinrichtungen werden mechanisch, elektrisch oder hydraulisch betätigt und sind im allgemeinen konstruktiv aufwendig. Insbesondere treten bei Propellern mit hohen Umfangsgeschwindigkeiten hohe Fliehkräfte auf, die von der Lagerung der drehbar gelagerten Propellerblätter aufgenommen werden müssen. Weiter müssen Umfangskräfte und axial wirkende Schubkräfte sowie gegebenenfalls auch Kreiselkräfte vom Propellerblatt über die Blattlagerung auf die Propellernabe übertragen werden. Aus DE-39 129 719 A1 ist ein Propeller bekannt, bei dem über eine allseitig begrenzt bewegliche Lagerung des Propellerblattes eine Anpassung an die jeweiligen Kräfteverhältnisse möglich ist, ohne daß im Betrieb auftretende Biegespannungen auf die Verbindung zwischen Propellerfuß und Propellernabe einwirken. Die Begrenzung der Bewegungsfreiheit des bekannten Propellerblattes erfolgt durch einen in eine Hülse ragenden Stift. Durch das Fehlen einer zweiten Lagerstelle ist diese Konstruktion bei Schwingungen, die z. Beispiel durch Drehschwingungen von Verbrennungsmotoren im Antriebsstrang hervorgerufen werden können, störungsanfällig.

Weitere Probleme treten bei der Verwendung von Propellerblättern in Faserverbund- oder Gemischbauweise auf, wobei sich die Verbindung von unterschiedlichen Werkstoffen beim Anschluß der Propellerblätter an metallische oder keramische Lager als schwierig erweist.

Bei Propellerblättern aus Faserverbundwerkstoffen hat es sich als vorteilhaft herausgestellt, die hohen Fliehkräfte der Propellerblätter durch eine Umwicklung von Krafteinleitungselementen auf die Blattlagerung zu übertragen. Wie in der DE 39 129 719 A1 und in der DE 4 203 405 A1 beschrieben, werden dabei zumeist Bolzen oder Wellen, die mehr oder weniger senkrecht zur Propellerachse angeordnet sind, von Verstärkungsfasern umwickelt. Dies ist bezüglich der axialen Anbindung des Propellerblattes an die metallischen Konstruktionselemente fasergerecht, verhindert jedoch nicht das Auftreten von den oben beschriebenen Schwingungen, wodurch die Lebensdauer derartiger Propeller begrenzt ist. Weiter wird hierdurch die drehbare Anbindung des Blattfußes an die Propellernabe zur Verstellung des Propellerblattes erschwert.

Es ist daher Aufgabe der vorliegenden Erfindung einen Verstellpropeller der eingangs genannten Art zu schaffen, der eine einfache Verstellung der Propellerblätter im Betrieb ermöglicht und eine lange Lebensdauer aufweist.

Diese Aufgabe wird bei einem Verstellpropeller der eingangs genannten Art durch die in Anspruch 1 gekennzeichnete Erfindung gelöst, das heißt dadurch, daß in Richtung der Propellerlängsachse oberhalb des Gelenklagers ein weiteres, am Umfang des Blattfußes des Propellerblattes angeordnetes Führungslager zur Führung des Propellerblattes vorgesehen ist.

Durch die Anordnung des Gelenklagers im Blattfuß des Propellerblattes kann der Blattfuß sehr kompakt gehalten werden. Dabei ist das Gelenklager so angeordnet, daß es die axial auf die Blattlagerung wirkenden Kräfte aufnimmt, aber durch die Fliehkräfte des Propellerblattes vornehmlich eine radiale Belastung erfährt. Bei einer Änderung der Propellerblattsteigung führt das Gelenklager im wesenlichen eine Schwenkbewegung aus. Bei einem Propellerblatt in Faserverbund- oder Gemischbauweise wird das Gelenklager von Verstärkungsfasern umschlungen, wodurch hohe Radialkräfte auf engstem Raum übertragen werden können. Das weitere radiale Führungslager übernimmt dabei die Führung des Propellerblattes. Die Anordnung dieser Lagerstelle kann dabei sowohl radial erfolgen oder zur Reduzierung der Biegekräfte im Propellerblatt auch in Umfangsrichtung oder Achsrichtung der Propellernabe geneigt sein. Eine weitere gedämpfte elastische Aufhängung kann zusätzlich noch ein Ausrichten des Propellerblattes bei unterschiedlichen Belastungen ermöglichen.
Vorteilhafte Ausgestaltungen der Erfindung ergeben sich aus den Unteransprüchen.
So ist vorgesehen, daß das Führungslager als radiales Gleitoder Wälzlager ausgebildet ist. Eine derartige Lagerkonstruktion ist billig, da diese Konstruktionselemente weit verbreitet sind.

Gemäß einer weiteren Ausgestaltung der Erfindung ist vorgesehen, daß das Führungslager starr mit der Propellernabe verbunden ist. Dies stellt eine konstruktiv einfache Lagerung dar.

Eine weitere vorteilhafte Ausgestaltung der Erfindung sieht vor, daß das Führungslager in einem Lagerbock elastisch gelagert ist. Hierdurch wird, wie oben bereits erwähnt, zusätzlich ein Ausrichten des Propellerblattes bei unterschiedlichen Belastungen ermöglicht.
Diese elastische Lagerung kann gemäß einer weiteren vorteilhaften Ausgestaltung der Erfindung dadurch verwirklicht werden, daß zwischen dem Führungslager und dem Lagerbock am Umfang des Führungslagers eine elastische Gummieinlage angeordnet ist.

Gemäß einer weiteren vorteilhaften Ausgestaltung der Erfindung ist vorgesehen, daß der Kern des Propellerblattes aus einem Wabensandwich- und / oder einem Schaumstoffmaterial besteht. Hierdurch wird in vorteilhafter Weise ein Propeller in Leichtbauweise geschaffen, bei dem die auftretenden Kräfte so gering wie möglich gehalten werden. Hierdurch ist es möglich, die Motorleistungen, die bei sogenannten Ultra-Leichtflugzeugen im Einsatz sind, ohne Schwierigkeiten zu übertragen. Dabei kann das Propellerblattgeräusch so gering wie möglich gehalten werden. Schließlich wird durch diese Konstruktion bei der Berührung des Propellerblattes mit einem Hindernis das Propellerblatt und nicht der Motor zerstört.

In einer weiteren vorteilhaften Ausgestaltung der Erfindung ist vorgesehen, daß die erwähnten Verstärkungsfasern als Kohlefasergurtbänder ausgeführt sind. Hierdurch erreicht man eine platzsparende, kompakte Bauweise des Gelenklagers.

Schließlich ist in einer weiteren vorteilhaften Ausgestaltung der Erfindung vorgesehen, daß bei Mehrblattpropellern entweder alle Propellerblätter über eine gemeinsame Verstelleinrichtung gleichermaßen verstellt werden, oder daß die Steigung einzelner Propellerblätter getrennt verstellt wird.

Ein Ausführungsbeispiel der Erfindung ist in der Zeichnung dargestellt und wird im folgenden näher beschrieben.

Es zeigen:
- Fig. 1: eine perspektive Teilansicht des Verstellpropellers;
- Fig. 2: eine Schnittansicht des Propellerblattfußes mit der Lagerung;
- Fig. 3: eine perspektivische Schnittansicht des Propellers; und
- Fig. 4: eine Aufsicht des Verstellpropellers.

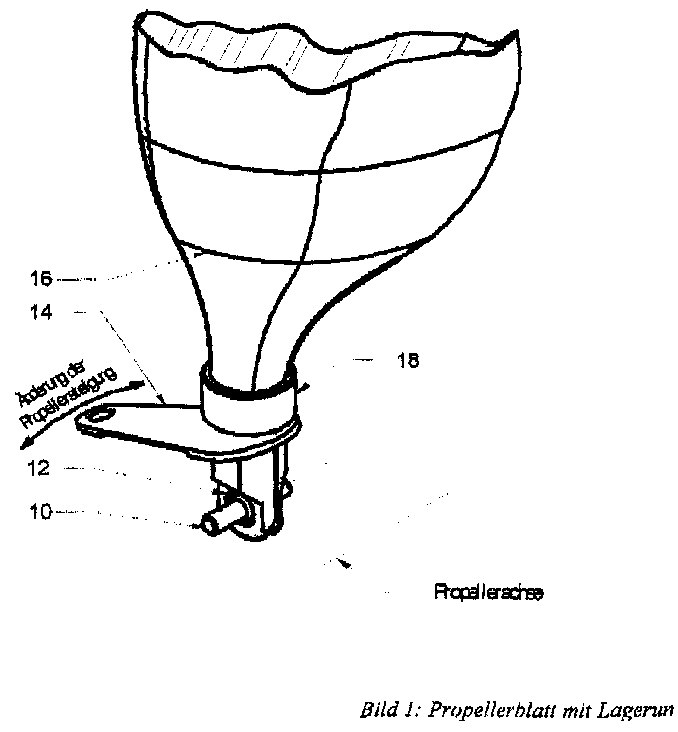

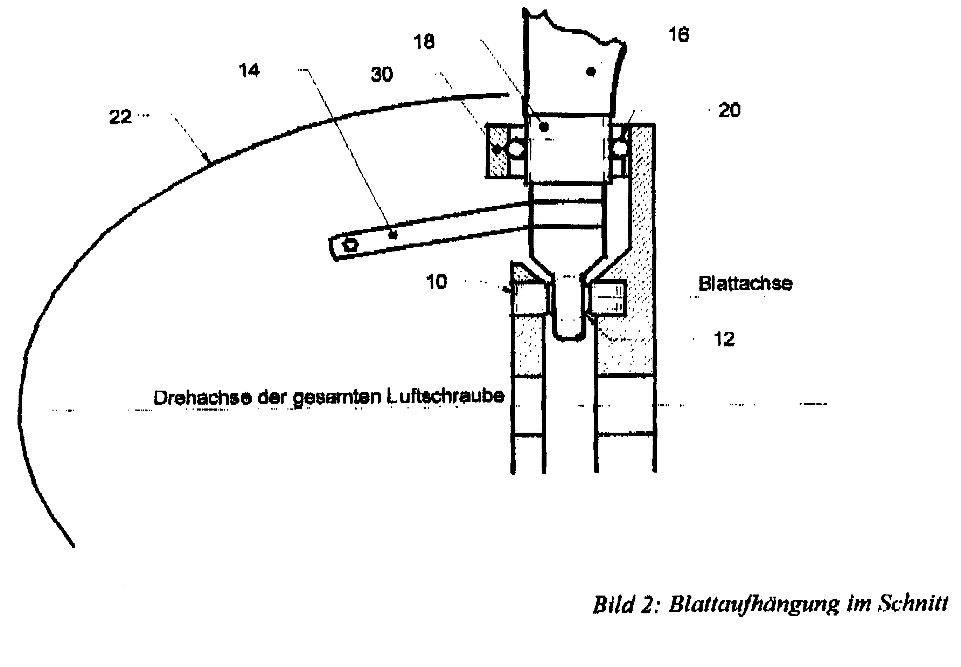

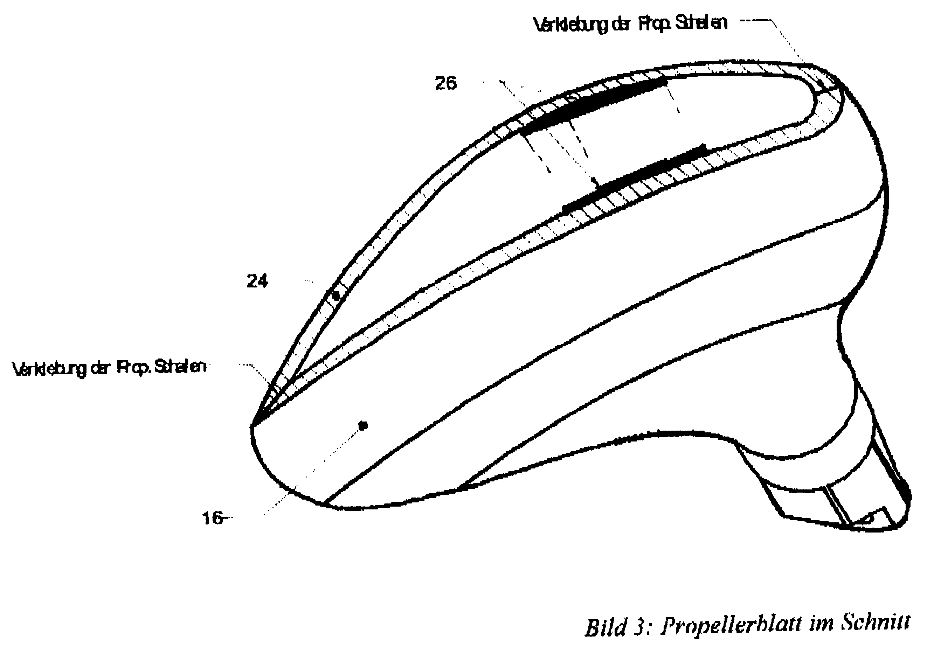

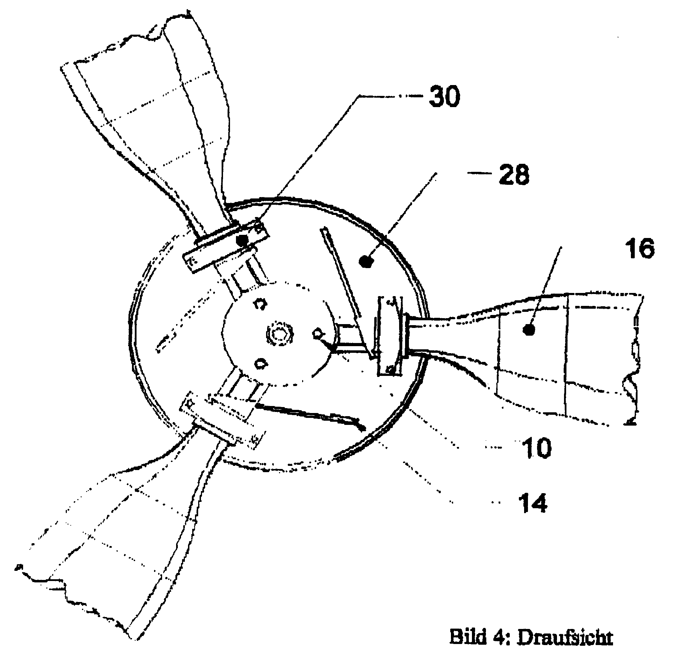

Der in den Fig. 1 - 4 dargestellte Propeller umfaßt drei Propellerblätter 16, die symmetrisch an einer Grundscheibe 28 angeordnet sind (siehe Fig. 4). Jedes Propellerblatt 16 besteht aus einem Kern 24 aus einem Wabensandwich- oder Schaumstoffmaterial. Am Umfang des Kerns 24 sind in Richtung der Propellerlängsachse Kohlefasergurtbänder 26 (siehe Fig. 3) angeordnet, die sich bis in den Propellerblattfuß parallel zur Propellerblattachse 10 um das Gelenklager 12 herum erstrecken. Oberhalb des Gelenklagers 12 ist der Verstellhebel 14 zur Änderung der Propellerblattsteigung angeordnet.

In Richtung der Propellerblattlängsachse ist weiter oberhalb des Verstellhebels bzw. des Gelenklagers ein Führungslager 18 am Propellerblattfuß vorgesehen. Dieses Führungslager 18 kann als radiales Gleit- oder Wälzlager ausgebildet sein und starr oder gemäß einer vorteilhaften Ausgestaltung der Erfindung elastisch mit der Propellerblattnabe verbunden sein. Bei der elastischen Ausführung ist zwischen dem Führungslager 18 und dem Lagerbock 30 eine weiche Gummieinlage 20 in Form von z.B. eines Gummiringes angeordnet. Die Propellerblattlagerung ist in üblicher Weise mittels einer Spinnerkappe 22 abgedeckt.

Wie in Fig. 3 dargestellt, besteht das Propellerblatt 16 aus einer Faserverbund- und/oder Gemischbauweise. Dabei besteht die Propelleraußenschale aus einem Waben- oder Schaumsandwichmaterial und der Propellerkern 24 ist entweder hohl oder besteht aus ebenfalls aus einem Waben- oder Schaumstoffmaterial.

Da die Propellerblattaufhängung elastisch ausgeführt ist, kann das Propellerblatt 16 allen auftretenden Biegekräften nachgeben. Die resultierende Kraft aus Fliehkraft und Auftriebs- und Trägheitskräften am Propellerblatt 16 stellt das Blatt so ein, daß dieses fast ausschließlich durch Zugkräfte belastet wird.

Da somit fast keine Biegekräfte auftreten, kann das Propellerblatt sehr leicht und mit einer relativ geringen Biegefestigkeit im Gegensatz zu herkömmlichen Propellern ausgeführt werden. Weiter kann die Blattaufhängung leichter konstruiert werden, da sie überwiegend nur radiale Zugkräfte aufnehmen muß. Dies ermöglicht eine leichte Verdrehung des Propellers um die Propellerblattachse. Die Propellerblattachse und somit auch die Achse des Gelenklagers ist hier bei ca. 90 Grad zur Propellerlängsachse angeordnet. Da hier nur Zugkräftein einer Richtung wirken, kann faserwerkstoffgerecht eine hohe Festkeit durch einfache Umschlingung des Gelenklagers 12 erreicht werden. Das elastisch aufgehängte Führungslager 18 übernimmt nur die Führung des Propellerblattes 16 bei schnellen Lastwechseln und den resultierenden Kräften durch Kreiselpräzision. Da aber das Blatt extrem leicht ist, sind auch diese Kräfte entsprechend gering.

Durch die Selbsteinstellung der Propellerblätter 16 im Betrieb sind größere Fertigungstoleranzen zulässig. Durch die entsprechende Materialeinsparung können die Propellerblätter billig hergestellt werden. Da so gut wie keine Biegekräfte auftreten, kann das Propellerblatt 16 hohl ausgeführt werden, wodurch eine sehr einfache Fertigung mit Stützstoffen, wie z. Beispiel Wabensandwichmaterial oder Schaumstoffkern ermöglicht wird.

## Patentansprüche

1. Verstellpropeller in Faserverbund- und/oder Gemischbauweise mit einem am Blattfuß eines jeden Propellerblattes angeordneten Gelenklager, welches im Propellerblatt zur Aufnahme der Fliehkräfte von Verstärkungsfasern umschlungen wird und so angeordnet ist, daß die Fliehkräfte im wesentlichen radial auf das Gelenklager wirken, und das Gelenklager zur Verstellung der Propellerblattsteigung im wesentlichen eine Schwenkbewegung ausführt, **dadurch gekennzeichnet, daß** in Richtung der Propellerblattlängsachse oberhalb des Gelenklagers (12) ein weiteres, am Umfang des Blattfußes des Propellerblattes (16) angeordnetes Führungslager (18) zur Führung des Propellerblattes (16) vorgesehen ist.

2. Verstellpropeller nach Anspruch 1, **dadurch gekennzeichnet, daß** das Führungslager (18) als radiales Gleit- oder Wälzlager ausgebildet ist.

3. Verstellpropeller nach Anspruch 2, **dadurch gekennzeichnet, daß** das Führungslager (18) starr mit der Propellernabe verbunden ist.

4. Verstellpropeller nach Anspruch 2, **dadurch gekennzeichnet, daß** das Führungslager (18) in einem Lagerbock (30) elastisch gelagert ist.

5. Verstellpropeller nach Anspruch 4, **dadurch gekennzeichnet, daß** zwischen dem Führungslager (18) und dem Lagerbock (30) am Umfang des Führungslagers (18) eine elastische Gummieinlage (20) angeordnet ist.

6. Verstellpropeller nach einem der Ansprüche 1-5, **dadurch gekennzeichnet, daß** die Propelleraußenschale aus einem Wabenoder schaumstoffsandwichmaterial und der Kern (24) des Propellerblattes (16) entweder hohl ist oder ebenfalls aus einem Wabensandwich- und/oder einem Schaumstoffmaterial besteht.

7. Verstellpropeller nach einem der Ansprüche 1-6, **dadurch gekennzeichnet, daß** die Verstärkungsfasern als Kohlefasergurtbänder (26) ausgebildet sind.

8. Verstellpropeller nach einem der Ansprüch 1-7, **dadurch gekennzeichnet, daß** die Steigung aller Propellerblätter (16) über eine gemeinsame Verstelleinrichtung gemeinsam erfolgt.

9. Verstellpropeller nach einem der Ansprüche 1-7, **dadurch gekennzeichnet, daß** die Steigung einzelner Propellerblätter (16) getrennt verstellt wird.

10. Verwendung des Verstellpropellers nach einem der Ansprüche 1-9, für Luft- und/oder Boden- und/oder Wasserfahrzeuge sowie für windkraftanlagen und Turbinen.
